# EUROPÄISCHE PATENTSCHRIFT

(11) **EP 3 348 342 B1**
(45) Veröffentlichungstag und Bekanntmachung des Hinweises auf die Patenterteilung: **29.07.2020**
(21) Anmeldenummer: 17151066.2
(22) Anmeldetag: 11.01.2017
(51) Int. Cl.: B23K 9/12, B23K 9/167, B23K 9/173

(54) **LICHTBOGENSCHWEISS- UND/ODER -LÖTVORRICHTUNG SOWIE LICHTBOGENSCHWEISS- UND/ODER -LÖTVERFAHREN**
ARC WELDING AND/OR SOLDERING DEVICE AND ARC WELDING AND/OR SOLDERING METHOD
DISPOSITIF DE SOUDAGE ET/OU DE BRASAGE À L'ARC ÉLECTRIQUE ET PROCÉDÉ DE SOUDAGE ET/OU DE BRASAGE À L'ARC ÉLECTRIQUE

(43) Veröffentlichungstag der Anmeldung: 18.07.2018
(73) Patentinhaber: EWM AG, 56271 Mündersbach (DE)
(72) Erfinder: Szczesny, Michael, 56271 Mündersbach (DE)
(74) Vertreter: Steiniger, Carmen

(56) Entgegenhaltungen:
- JP-A- H0 459 186
- US-A- 2 778 099
- US-A- 3 940 586
- US-A1- 2002 158 048
- US-B2- 8 680 432

## Beschreibung

Die vorliegende Erfindung betrifft eine Lichtbogenschweiß- und/oder -lötvorrichtung mit einem an eine Brennerstromquelle angeschlossenen Brenner und einer neben dem Brenner vorgesehenen Schweiß- und/oder Lötzusatzzuführeinrichtung. Die Gattung zeigt die US-A-3 940 586.

Ferner betrifft die vorliegende Erfindung ein Lichtbogenschweiß- und/oder -lötverfahren, bei welchem ein Brenner durch eine Brennerstromquelle mit Strom versorgt wird und einer Schweiß- oder Lötstelle durch eine neben dem Brenner vorgesehene Schweiß- und/oder Lötzusatzzuführeinrichtung ein Schweiß- oder Lötzusatz zugeführt wird.

Bekannterweise wird beim Lichtbogenschweißen unter Verwendung eines Schweiß- oder Lötzusatzes die zum Aufschmelzen des Schweiß- oder Lötzusatzes erforderliche Energie durch einen sich zwischen dem Werkstück und einer Elektrode des Brenners ausgebildeten Lichtbogen geliefert. Der Lichtbogen wird durch elektrische Kontaktierung des zu schweißenden oder zu lötenden Werkstückes und einer Brennerelektrode ausgebildet und führt zum Aufschmelzen des Schweiß- oder Lötzusatzes an der Schweiß- oder Lötstelle. Der Schweiß- oder Lötzusatz ist typischerweise ein Metalldraht oder -stab. Der aufgeschmolzene Schweiß- oder Lötzusatz bildet ein Schmelzbad aus, durch welches die schweißenden bzw. zu lötenden Werkstücke verbunden werden.

Die Zuführung des Schweiß- oder Lötzusatzes zu der Schweiß- oder Lötstelle und die Stromzuführung zum Brenner zur Ausbildung des Lichtbogens sind voneinander entkoppelt, wodurch ein Schweißer/Löter den Schweiß- oder Lötstrom auf die konkrete Schweiß- oder Lötaufgabe abstimmen und der Schweiß- oder Lötstelle nur so viel Schweiß- oder Lötzusatz zugeben kann, wie es gerade erforderlich ist.

Darüber hinaus ist es insbesondere zur Erzeugung besonders flacher Schweiß- oder Lötnähte mit vergrößerter Schmelzbadoberfläche, welche eine geringe Durchmischung des geschmolzenen Schweiß- oder Lötzusatzes mit dem Werkstückmaterial aufweisen, aus dem Stand der Technik bekannt, den Lichtbogen pendelartig zu abzulenken, sodass das Schmelzbad über einer größere Fläche verteilt wird. Hierzu wird das den Lichtbogen als stromdurchflossenen Leiter umgebende ringförmige Magnetfeld, welches sich aufgrund eines Stromflusses durch die Brennerelektrode und das Werkstück ergibt, elektromagnetisch beeinflusst.

Die elektromagnetische Beeinflussung kann zum einen durch an dem Schweiß- oder Lötbrenner vorgesehene Spulen, welche bei Strombeaufschlagung eine Ablenkung des Lichtbogens hervorrufen, erzeugt werden. Sobald die Spulen mit Wechselstrom versorgt werden, kommt es zu einer abwechselnden Ablenkung des Lichtbogens zu unterschiedlichen Seiten, wodurch das vergrößerte Schmelzbad erzeugt wird. Nachteilig daran ist jedoch, dass das Gewicht des Schweiß- oder Lötbrenners durch das Anbringen der zusätzlichen Spulen erhöht wird, wobei zugleich die Brennerabmessungen vergrößert werden, was zu einer Verschlechterung der Schweißnahtqualität führen kann.

Eine weitere Möglichkeit, den Lichtbogen abzulenken, ist in der Druckschrift EP 2 777 858 A1 beschrieben. Hier wird der Lichtbogen durch Anlegen eines Wechselstroms an zwei, über horizontal und vertikal zueinander versetzte und auf unterschiedlichen Seiten einer Wolframelektrode angeordnete Führungsrohre einer Schweißstelle zugeführte Schweißdrähte beeinflusst. Das Anlegen des Wechselstroms an die Schweißzusätze bewirkt, dass sich um diese jeweils ein magnetisches Wechselfeld ausbildet. Durch die Anordnung der Schweißzusätze in unmittelbarer Nähe des Lichtbogens kann der Lichtbogen durch Wechselwirken der um die Schweißzusätze ausgebildeten magnetischen Felder und des magnetischen Feldes um den Lichtbogen, pendelartig, abwechselnd zu unterschiedlichen Seiten abgelenkt werden, wodurch das Schmelzbad ebenfalls vergrößert wird.

Eine derartige pendelartige Bewegung des Lichtbogens hat jedoch den Nachteil, dass insbesondere beim Herstellen von bogenförmigen Schweißverbindungen die zu verschweißenden Werkstücke lückenhaft bzw. mit unzureichender Qualität verbunden werden.

Es ist die Aufgabe der vorliegenden Erfindung, eine Lichtbogenschweiß- und/oder -lötvorrichtung sowie ein Lichtbogenschweiß- und/oder -lötverfahren bereitzustellen, mit welcher/m eine Schweiß- oder Lötnaht mit hoher Qualität erzeugt werden kann.

Die Aufgabe wird zum einen durch eine Lichtbogenschweiß- und/oder -lötvorrichtung gemäß Anspruch 1 gelöst. Erfindungsgemäß sind neben dem Brenner wenigstens zwei relativ zueinander und zu dem Brenner um die Brennerlängsachse in Brennerumfangsrichtung positionsverstellbare Schweiß- und/oder Lötzusatzzuführeinrichtungen vorgesehen. Hierdurch wird die Variabilität in der Zuführung von Schweiß- und/oder Lötzusatz zur Schweiß- oder Lötstelle noch gesteigert, sodass mit dieser Weiterbildung der Erfindung noch bessere Schweiß- oder Lötergebnisse erzielt werden können. Dadurch, dass bei dieser Weiterbildung der Erfindung die wenigstens zwei Schweiß- und/oder Lötzusatzzuführeinrichtungen frei zueinander einstellbar sind, können sie beispielsweise symmetrisch um den Brenner angeordnet werden, wodurch der Schweiß- oder Lötstelle gleichmäßig von mehreren Seiten der Schweiß- oder Lötzusatz zugeführt werden kann.

Vorzugsweise sind die Schweiß- und/oder Lötzusatzzuführeinrichtungen auch dahingehend positionsverstellbar, dass nicht nur deren Ausrichtung in Brennerumfangsrichtung verändert werden kann, sondern beispielsweise auch deren Abstand, Neigung und/oder Ausrichtung zu dem Brenner.

In bestimmten Ausführungsformen der erfindungsgemäßen Lichtbogenschweiß- und/oder -lötvorrichtung kann die wenigstens eine Schweiß- und/oder Lötzusatzzuführeinrichtungen trotz ihrer Verstellbarkeit in einer festen Position an dem Brenner oder in Nähe des Brenners fixierbar sein. Wenn bei einer solchen Ausgestaltung der Erfindung wenigstens zwei Schweiß- und/oder Lötzusatzzuführeinrichtungen vorgesehen sind, können diese trotz ihrer Verstellbarkeit auch in einer unsymmetrischen, festen Anordnung um den Brenner herum gehalten werden.

Bei der vorliegenden Erfindung können auch mehr als zwei, beispielsweise drei, vier, fünf oder sechs Schweiß- und/oder Lötzusatzzuführeinrichtungen um den Brenner platziert sein. Je mehr Schweiß- und/oder Lötzusatzzuführeinrichtungen um den Brenner angeordnet sind, umso mehr Variabilität ergibt sich bei der Schweiß- oder Lötzusatzzuführung, desto komplexer und teuer wird jedoch auch die Lichtbogenschweiß- und/oder -lötvorrichtung.

Für eine einfache Positionsverstellbarkeit der Schweiß- und/oder Lötzusatzzuführeinrichtung(en) ist bevorzugt wenigstens eine der Schweiß- und/oder Lötzusatzzuführeinrichtungen an einem an dem Brenner vorgesehenen, um die Brennerlängsachse in Brennerumfangsrichtung verstellbaren Montageelement montiert. Durch das Anbringen der wenigstens einen Schweiß- und/oder Lötzusatzzuführeinrichtung an diesem Montageelement kann die Anordnung dieser Schweiß- und/oder Lötzusatzzuführeinrichtung(en) um den Brenner auf einfache Weise verändert werden. So kann beispielsweise bei Verwendung mehrerer Schweiß- und/oder Lötzusatzzuführeinrichtungen eine symmetrische Anordnung der Schweiß- und/oder Lötzusatzzuführeinrichtungen anwendungsfallspezifisch durch Bewegen des die Schweiß- und/oder Lötzusatzzuführeinrichtung haltenden Montageelementes in eine unsymmetrische Anordnung überführt werden.

Ferner kann die wenigstens eine Schweiß- und/oder Lötzusatzzuführvorrichtung mit Hilfe des/der Montageelemente(s) auch schnell und einfach an dem Brenner angebracht und von diesem abgenommen werden. So können die jeweilige Schweiß- und/oder Lötzusatzzuführeinrichtung nicht nur im Reparatur- oder Wartungsfall einfach entfernt oder ausgetauscht werden, es kann auch durch die Anzahl der vorgesehenen Montageelemente die Anzahl der um den Brenner vorsehbaren Schweiß- und/oder Lötzusatzzuführeinrichtungen variiert werden.

Vorzugsweise sind dann, wenn mehrere Schweiß- und/oder Lötzusatzzuführeinrichtungen zum Einsatz kommen, diese jeweils an einer separaten Montageeinheit angebracht, da so der Schweiß- oder Lötvorgang optimal gesteuert und variiert werden kann. Ferner können jedoch auch mehrere Schweiß- und/oder Lötzusatzzuführeinrichtungen an einem gemeinsamen Montageelement vorgesehen sein. Es können auch nur eine oder einzelne der Schweiß- und/oder Lötzusatzzuführeinrichtungen an einem Montageelement vorgesehen sein, wohingegen die jeweils anderen Schweiß- und/oder Lötzusatzzuführeinrichtungen direkt an dem Brenner angebracht sein können.

Das Montageelement ist vorzugsweise an dem Brenner, beispielsweise an dem Brennerkontaktrohr des Brenners, welches in erster Linie der Aufnahme der Elektrode dient, vorgesehen. Das Montageelement kann jedoch auch an einer anderen Stelle des Brenners oder separat neben dem Brenner vorgesehen sein.

Als besonders günstig hat es sich erwiesen, wenn das Montageelement ein um ein Brennerkontaktrohr des Brenners vorgesehener Montagering ist.

Da der Brenner in der Regel ein Brennerkontaktrohr aufweist bzw. im Wesentlichen rohrförmig ausgebildet ist, hat sich eine ringförmige Ausgestaltung des Montageelementes als besonders geeignet herausgestellt, da der Montagering einfach über das Brennerkontaktrohr geschoben oder bei zweiteiliger Ausbildung des Montageringes durch Klappen um den und/oder Klemmen an dem Brenner befestigt werden kann.

Hierbei kann der Montagering derart an dem Brennerkontaktrohr angebracht sein, dass der Montagering fest mit dem Brennerkontaktrohr verbunden ist und damit eine Relativbewegung zwischen Montagering und Brennerkontaktrohr weitestgehend vermieden wird. In einer solchen Ausgestaltungsvariante ist die wenigstens eine an dem Montagering vorgesehene Schweiß- und/oder Lötzusatzzuführeinrichtung derart an dem Montagering angebracht, dass diese gegenüber dem Montagering drehbar ist. Hierzu kann der Montagering beispielsweise eine Führungsschiene und Halteelemente aufweisen.

Ferner kann der Montagering jedoch auch drehbar gegenüber dem Brennerkontaktrohr an dem Brennerkontaktrohr vorgesehen sein, wobei die wenigstens eine Schweiß- und/oder Lötzusatzzuführeinrichtung in einem solchen Fall vorzugsweise fest an dem Montagering angebracht ist. Ebenso ist es jedoch auch denkbar, dass der Montagering derart ausgestaltet und an dem Brennerkontaktrohr platziert ist, dass zum einen der Montagering gegenüber dem Brenner und zum anderen die Schweiß- und/oder Lötzusatzzuführeinrichtung gegenüber dem Montagering bewegbar ist.

Bevorzugt ist an jedem Montagering lediglich eine Schweiß- und/oder Lötzusatzzuführeinrichtung vorgesehen, es können jedoch auch mehrere Schweiß- und/oder Lötzusatzzuführeinrichtungen an einem Montagering angebracht sein.

Vorteilhafterweise ist die wenigstens eine Schweiß- und/oder Lötzusatzzuführeinrichtung an einer beispielsweise rechteckförmigen Auskragung des Montageringes, welche wenigstens eine Durchgangsbohrung zur Aufnahme der in der Regel eine Schweiß- und/oder Lötzusatzleitung aufweisenden Schweiß- und/oder Lötzusatzzuführeinrichtung aufweist, befestigt.

In alternativen Ausgestaltungsvarianten der erfindungsgemäßen Lichtbogenschweiß- und/oder -lötvorrichtung kann das Montageelement auch nicht ringförmig, sondern beispielsweise als Halbkreis oder in Form eines Zapfens, ausgestaltet sein.

Ganz besonders bevorzugt ist das Montageelement derart ausgebildet, dass das Montageelement an das Brennerkontaktrohr klemmbar oder geklemmt ist, da das Montageelement so schnell an den Brenner angebracht und wieder von diesem entfernt werden kann. Dies bietet insbesondere den Vorteil, dass die Anzahl der um den Brenner vorgesehenen Schweiß- und/oder Lötzusatzzuführeinrichtungen einfach variiert werden kann und damit die Lichtbogenschweiß- und/oder Lötvorrichtung unkompliziert an unterschiedliche Schweißprozesse und -bedingungen angepasst werden kann. Zudem können auch defekte Schweiß- und/oder Lötzusatzzuführeinrichtungen einfach ausgetauscht oder repariert werden.

Insofern das Montageelement um das Brennerkontaktrohr geklemmt wird, hat sich eine zweiteilige Ausgestaltung des Montageelementes als vorteilhaft erwiesen. Hierbei weist das Montageelement vorteilhafterweise eine Verschlussmöglichkeit auf. So kann beispielsweise ein ringförmig ausgestaltetes Montageelement aus zwei Halbschalen bestehen, welche zueinander und voneinander weg klappbar sind und mittels einer Verschlussmöglichkeit in einer einen Ring ausbildenden, das Kontaktrohr umgreifenden Position gehalten werden können. Ferner kann das Montageelement jedoch auch nur aus einer einzigen Komponente oder mehr als zwei Komponenten ausgebildet sein.

In alternativen Ausführungsformen der erfindungsgemäßen Lichtbogenschweiß- und/oder -lötvorrichtung kann das Montageelement jedoch auch auf andere Weise mit dem Brenner verbunden sein. Beispielsweise kann das Montageelement mit dem Kontaktrohr verschraubt, verklebt, mittels einer Presspassung oder mittels eines zusätzlichen Halteelementes verbunden sein.

Als besonders vorteilhaft hat es sich auch erwiesen, wenn an dem Montageelement wenigstens ein Führungselement für eine Schweiß- und/oder Lötzusatzleitung der wenigstens einen Schweiß- und/oder Lötzusatzzuführeinrichtung vorgesehen ist, mit welchem die Schweiß- und/oder Lötzusatzleitung und/oder der durch die Schweiß- und/oder Lötzusatzleitung geführte Schweiß- und/oder Lötzusatz positionsgerecht und sicher zu dem Lichtbogen geführt und damit ein reproduzierbarer Schweißprozess gewährleistet werden kann. Der Einsatz des wenigstens einen Führungselementes bietet sich insbesondere bei sehr lang ausgebildeten Schweiß- und/oder Lötzusatzleitungen an, wobei hier ein Verlaufen der Schweiß- und/oder Lötzusatzleitung und/oder eine Bewegung der Schweiß- und/oder Lötzusatzleitung während des Schweißprozesses aufgrund einer Bewegung der Lichtbogenschweiß- und/oder -lötvorrichtung vermieden werden kann.

Das wenigstens eine Führungselement ist vorzugsweise gabelförmig ausgebildet und erstreckt sich ausgehend von dem Montageelement in Richtung eines den Lichtbogen erzeugenden Brennerendes, wodurch die einen vorzugsweise drahtförmig ausgebildeten Schweiß- oder Lötzusatz führende Schweiß- und/oder Lötzusatzleitung positionsgenau zwischen den Gabelzinken des Führungselementes zu dem Lichtbogen geführt und damit eine Schweiß- oder Lötnaht mit hoher Qualität erzeugt werden kann.

Hierbei ist vorteilhafterweise für jede an dem Montageelement vorgesehene Schweiß- oder Lötzusatzleitung wenigstens ein Führungselement an dem Montageelement vorgesehen. Das wenigstens eine Führungselement ist dabei günstigerweise so ausgebildet, dass dieses sich entlang des Brenners erstreckt und ein in Richtung des Lichtbogen zeigendes gabelartig ausgebildetes Ende aufweist, welches der Aufnahme und dem Halten der Schweiß- oder Lötzusatzleitung dient. Die Schweiß- oder Lötzusatzleitung verläuft hierbei entlang des Führungselementes, zwischen Brenner und Führungselement oder außerhalb des Führungselementes und wird an einem zu dem Lichtbogen zeigenden Ende durch das gabelartigen Ende des Führungselementes aufgenommen und gehalten. Das Führungselement ist hierbei so ausgestaltet, dass das zu dem Lichtbogen zeigende Ende der Schweiß- oder Lötzusatzleitung bzw. ein durch die Schweiß- oder Lötzusatzleitung geführter Schweiß- oder Lötdraht sich in unmittelbarer Nähe des Lichtbogens befindet.

In zweckmäßigen Ausbildungen der Erfindung ist das Führungselement an einem von dem Lichtbogen wegweisenden Ende des Führungselementes mit dem Montageelement verschraubt, vernietet, verklebt, formschlüssig oder auf andere Art und Weise verbunden.

In alternativen Ausgestaltungsvarianten der erfindungsgemäßen Lichtbogenschweiß- und/oder -lötvorrichtung kann das wenigstens eine Führungselement auch als Führungskanal oder mit einer Führungsöse für die jeweilige Schweiß- und/oder Lötzusatzzuführeinrichtung ausgebildet sein und/oder kann die Lichtbogenschweiß- und/oder -lötvorrichtung auch kein Führungselement für die Schweiß- und/oder Lötzusatzzuführeinrichtungen aufweisen. Zudem muss das Führungselement auch nicht zwingend an dem Montageelement vorgesehen sein, sondern kann auch an einer Komponente des Brenners befestigt sein.

In einer besonders vorteilhaften Ausbildung der erfindungsgemäßen Lichtbogenschweiß- und/oder -lötvorrichtung sind um den Brenner wenigstens drei, mit Strom mit zeitlich zueinander versetzter Amplitude versorgbare, in ihrer Position relativ zueinander einstellbare und/oder symmetrisch um den Brenner anordenbare Schweiß- und/oder Lötzusatzzuführeinrichtungen angeordnet.

Es werden also bei dieser Ausgestaltung der vorliegenden Erfindung wenigstens drei, um den Brenner verteilte Schweiß- und/oder Lötzusatzzuführeinrichtungen verwendet, durch die aus unterschiedlichen Zuführrichtungen wenigstens drei Schweiß- oder Lötzusätze der Schweiß- oder Lötstelle zugeführt werden, wobei die wenigstens drei Schweiß- oder Lötzusätze zeitlich zueinander versetzt mit Strom beaufschlagt werden. Durch die Anordnung der wenigstens drei Schweiß- und/oder Lötzusatzzuführeinrichtungen um den einen Lichtbogen ausbildenden Brenner und die zeitlich versetzte Beaufschlagung der Schweiß- und/oder Lötzusatzzuführeinrichtungen mit Strom, kann ein sich kreis- oder ellipsenförmig bewegender Lichtbogen erzeugt werden, welcher sich insbesondere zum Schweißen oder Löten von kurvenförmigen Schweißnähten eignet.

Insbesondere durch eine symmetrische Anordnung der Schweiß- und/oder Lötzusatzzuführeinrichtungen um den Brenner kann eine sehr exakte Kreisbewegung des Lichtbogens erzeugt werden. Durch die freie Einstellbarkeit der Schweiß- und/oder Lötzusatzzuführeinrichtungen können die Schweiß- und/oder Lötzusatzzuführeinrichtungen anwendungsfallspezifisch von einer symmetrischen Anorndung in eine unsymmetrische Anordnung überführt werden, was den Vorteil bietet, dass die Bewegung des Lichtbogens weitgehend variabel an unterschiedlich zu erzeugende Schweiß- oder Lötnähte und Schweißbedingungen angepasst werden kann.

In Abhängigkeit von der räumlichen Anordnung, insbesondere des Abstandes des von dem Brenner erzeugten Lichtbogens zu den Schweiß- und/oder Lötzusatzzuführeinrichtungen und der Eigenschaften des die Schweiß- und/oder Lötzusatzzuführeinrichtungen durchfließenden Wechselstromes oder gepulsten Gleichstromes wird sich der Lichtbogen auf einer kleineren oder größeren Kreis- oder Ellipsenbahn bewegen.

Vorteilhafterweise müssen bei dieser Ausgestaltung der vorliegenden Erfindung keine zusätzlichen Spulen an dem Brenner angebracht werden, welche das Gewicht des Brenners erhöhen und sich negativ auf die Abmessung des Brenners auswirken. Ferner können aufgrund der kreis- oder ellipsenförmigen Bewegung des Lichtbogens auch Kurvenbahnen mit einer sehr hohen Qualität, ohne Lücken geschweißt werden.

Der erfindungsgemäß eingesetzte Brenner weist eine von einem Brennerkontaktrohr umschlossene Elektrode auf, welche mit Gleich- oder Wechselstrom beaufschlagt wird. Durch den Stromfluss durch die Elektrode und ein ebenfalls mit Strom beaufschlagtes, zu verschweißendes Werkstück wird ein Lichtbogen zwischen dem Brenner und dem Werkstück ausgebildet, welcher die durch die wenigstens drei Schweiß- und/oder Lötzusatzzuführeinrichtungen zugeführten Schweiß- und/oder Lötzusätze aufschmilzt. Um den Lichtbogen herum bildet sich aufgrund des Stromflusses ein ringförmiges magnetisches Feld aus, welches zur Ablenkung des Lichtbogens und damit zur Erzeugung einer kreis- oder ellipsenförmigen Bewegung des Lichtbogens ausgenutzt wird.

Zur Ablenkung des Lichtbogens sind um den Brenner verteilt die wenigstens drei Schweiß- und/oder Lötzusatzzuführeinrichtungen angeordnet, welche zeitlich versetzt zueinander mit Strom beaufschlagt werden. Der Stromfluss durch die Schweiß- und/oder Lötzusatzzuführeinrichtungen führt zur Ausbildung magnetischer Felder um die Schweiß- und/oder Lötzusatzzuführeinrichtungen, welche mit dem magnetischen Feld um den Lichtbogen wechselwirken. Durch die zeitlich zueinander versetzte Beaufschlagung der Schweiß- und/oder Lötzusatzzuführeinrichtungen mit Strom und die sich damit ändernden Magnetfelder um die der Schweiß- oder Lötstelle zugeführten Schweiß- oder Lötzusätze wird der Lichtbogen kontinuierlich in andere Richtungen abgelenkt, wodurch eine kreis- oder ellipsenförmige Bewegung des Lichtbogens hervorgerufen wird.

In dieser Ausbildung der erfindungsgemäßen Lichtbogenschweiß- und/oder -lötvorrichtung können die Schweiß- und/oder Lötzusatzzuführeinrichtungen anstatt mit Wechselstrom auch mit Gleichstrom beaufschlagt werden, wobei eine Ablenkung des Lichtbogens hierbei durch entsprechendes Ein- und Ausschalten der Gleichstromquellen erreicht wird.

Vorzugsweise erfolgt der Stromamplitudenwechsel der zur Beaufschlagung der Schweiß- und/oder Lötzusatzzuführeinrichtungen verwendeten Ströme entsprechend einem sinusförmigen zeitlichen Verlauf oder weist der verwendete Wechselstrom einen sinusförmigen zeitlichen Verlauf auf. Ferner können diese Ströme jedoch auch nichtsinusförmigen, beispielsweise einen sägezahnförmigen, rechteckförmigen oder dreiecksförmigen Verlauf besitzen. Die Frequenz, Periode, Stromstärke und Spannung der anzulegenden Ströme oder des zur Strombeaufschlagung der Schweiß- und/oder Lötzusatzzuführeinrichtungen eingesetzten Wechselstroms sind frei wählbar.

Vorteilhafterweise kann durch die Anordnung von wenigstens drei Schweiß- und/oder Lötzusatzzuführeinrichtungen um den Brenner herum eine nahezu kreisförmige Bewegung des Brenners erreicht werden, was sich insbesondere beim Schweißen oder Löten von Kurvenbahnen als besonders vorteilhaft herausgestellt hat. Durch die kreisförmige Bewegung des Lichtbogens ist es möglich, Kurven kontinuierlich, ohne Lücken zu schweißen, sodass eine Schweißnaht mit hoher Qualität erzeugt wird.

Die Beaufschlagung der Schweiß- und/oder Lötzusatzzuführeinrichtungen mit Strom mit zeitlich veränderlicher Amplitude kann durch eine oder mehrere Steuer- und/oder Regelvorrichtungen oder manuell erfolgen. Ebenso kann auch die Stromversorgung der Brennerelektrode und des bzw. der zu verschweißenden bzw. zu verlötenden Werkstücke(s) durch eine Steuer und/oder Regelvorrichtung bzw. manuell erfolgen.

Bei der vorliegenden Erfindung kann/können die jeweils verwendete(n) Schweiß- und/oder Lötzusatzzuführeinrichtung(en) beliebig ausgerichtet um den Brenner angeordnet sein. Auch der Abstand zwischen dem Brenner und der wenigstens einen Schweiß- und/oder Lötzusatzzuführeinrichtung kann in gewissen Grenzen frei gewählt werden. Für eine besonders kompakte Bauweise und gute Beeinflussbarkeit des Lichtbogens bei der erfindungsgemäßen Lichtbogenschweiß- und/oder -lötvorrichtung ist es jedoch vorteilhaft, die Schweiß- und/oder Lötzusatzzuführeinrichtungen mit einem nur geringen Abstand, beispielsweise mit einem Abstand von 1 bis 5 cm, neben dem Brenner vorzusehen. Hierbei können die Schweiß- und/oder Lötzusatzzuführeinrichtungen regelmäßig oder unregelmäßig um den Brenner herum angeordnet sein.

Der Begriff des Lichtbogenschweißens oder -lötens schließt bei der vorliegenden Erfindung sämtliche Lichtbogenschweiß- oder -lötverfahren ein, wozu insbesondere Lichtbogenschweiß- oder -lötverfahren mit abschmelzender sowie nicht abschmelzender Elektrode zählen.

Je nach Ausgestaltungsvariante der erfindungsgemäßen Lichtbogenschweiß- oder -lötvorrichtung können die verwendeten Schweiß- oder Lötzusätze als Heiß- oder Kaltdraht eingesetzt werden. Insofern ein Heißdraht verwendet wird, wird der Schweiß- oder Lötzusatz derart elektrisch kontaktiert, dass der Schweiß- oder Lötzusatz infolge einer Widerstandserwärmung vorgewärmt einer Schweiß- oder Lötstelle zugeführt wird. Hierbei kommt als Schweiß- oder Lötzusatz vorzugsweise ein elektrisch leitfähiger Schweiß- oder Lötdraht zum Einsatz, welcher während des Schweiß- oder Lötprozesses schmilzt und damit ein für den Schweiß oder Lötprozess notwendiges Schmelzbad ausbildet. Der Schweiß- oder Lötzusatz kann jedoch grundsätzlich aus allen erdenklichen, elektrisch leitfähigen Werkstoffen ausgebildet sein und muss nicht zwingend drahtförmig sein, sondern kann auch in einer anderen Form, beispielsweise in einer Pulverform oder in Stabform, vorliegen.

Insbesondere dann, wenn ein drahtförmiger Schweiß- oder Lötzusatz verwendet wird, hat es sich als vorteilhaft erwiesen, wenn die wenigstens eine Schweiß- und/oder Lötzusatz-zuführeinrichtung jeweils eine Schweiß- oder Lötdrahtförder- und -vorschubeinrichtung, welche den Schweiß- oder Lötdraht sukzessive der Schweiß- oder Lötstelle zuführt, aufweist.

Bei der vorliegenden Erfindung kann der Brenner mit oder ohne Gasdüse ausgebildet sein, sodass in Abhängigkeit des Lichtbogenschweiß- oder -lötprozesses ein Schutzgas eingesetzt werden kann.

Die erfindungsgemäße Lichtbogenschweiß- und/oder -lötvorrichtung kann beispielsweise eine MIG/MAG- oder WIG-Schweiß- oder -lötvorrichtung sein, wobei MIG/MAG für Metall-Inertgasschweißen oder -löten bzw. Metall-Aktivgasschweißen oder -löten und WIG für Wolfram-Inertgasschweißen oder -löten steht.

Je nach Ausführungsform der erfindungsgemäßen Lichtbogenschweiß- und/oder -lötvorrichtung kann die wenigstens eine Schweiß- und/oder Lötzusatzzuführeinrichtung eine Kaltdrahtzuführung sein und damit an keine Stromquelle angeschlossen seine oder eine Heißdrahtzuführung sein und dabei an eine Stromquelle angeschlossen sein. Wenn mehrere Schweiß- und/oder Lötzusatzzuführeinrichtung bei der Erfindung zum Einsatz kommen, können diese entweder an separate Stromquellen oder an eine pulsbare Stromquelle angeschlossen sein. Hierdurch wird es ermöglicht, dass die einzelnen Schweiß- und/oder Lötzusatzzuführeinrichtungen zeitlich versetzt zueinander mit Strom beaufschlagt werden, wodurch, wie oben erörtert, eine kreis- oder ellipsenförmige Bewegung des Lichtbogens erzeugt werden kann.

Als besonders vorteilhaft hat es sich bei der vorliegenden Erfindung erwiesen, wenn die wenigstens eine Schweiß- und/oder Lötzusatzzuführeinrichtung entlang der Brennerlängsachse verläuft und ein in Richtung eines durch den Brenner ausbildbaren Lichtbogens ausgerichtetes Schweiß- und/oder Lötzusatzzuführungsende aufweist.

Durch ein Abwinkeln des zu dem Lichtbogen weisenden Endes der Schweiß- und/oder Lötzusatzzuführeinrichtung(en), insbesondere der Schweiß- und/oder Lötzusatzleitung(en) in Richtung des Brenners kann/können die Schweiß- und/oder Lötzusatzleitung(en) der Schweiß- und/oder Lötzusatzzuführeinrichtung(en) besonders einfach und sicher von dem jeweiligen Führungselement der Lichtbogenschweiß- und/oder -lötvorrichtung aufgenommen werden. Zum anderen kann/können die von der/den Schweiß- und/oder Lötzusatzleitung(en) geführte(n) Schweiß- und/oder -lötzusatz/zusätze so anwendungsgerecht dem Lichtbogen zugeführt werden.

Vorteilhafterweise ist/sind bei einer derartigen Ausgestaltung des/der Schweiß- und Lötzusatzzuführungsendes/n und einer Anordnung des/der Führungselemente(s) zwischen dem Brenner und den Schweiß- und/oder Lötzusatzleitung(en), das/die gabelartige(n) Ende(n) des/der Führungselemente(s) in entgegengesetzte Richtung zu dem/den Ende(n) der Schweiß- und/oder Lötzusatzzuführeinrichtung(en), das heißt, von dem Brenner weg in Richtung der Schweiß- und/oder Lötzusatzleitung(en), gebogen, sodass die Schweiß- und/oder Lötzusatzleitung(en) zuverlässig und einfach von dem/den Führungselemente(n) aufgenommen werden kann/können.

Die Aufgabe wird ferner durch ein Lichtbogenschweiß- und/oder -lötverfahren gemäß Anspruch 10 gelöst. Gemäß dem erfindungsgemäßen Verfahren sind um den Brenner wenigstens zwei Schweiß- und/oder Lötzusatzzuführeinrichtungen vorgesehen, deren Position zueinander und relativ zu dem Brenner um die Brennerlängsachse in Brennerumfangsrichtung vor und/oder während und/oder nach dem Schweißvorgang verstellt wird. Hierdurch kann der jeweilige Schweiß- oder Lötzusatz beispielsweise symmetrisch um den Brenner und die Schweiß- oder Lötstelle verteilt der Schweiß- oder Lötstelle zugeführt werden. Ebenso können die Schweiß- oder Lötzusätze jedoch auch unsymmetrisch um den Brenner verteilt der Schweiß- oder Lötstelle zugeführt werden.

In einer ganz besonders bevorzugten Verfahrensvariante wird die wenigstens eine Schweiß- und/oder Lötzusatzzuführeinrichtung durch ein an dem Brenner vorgesehenes und mit der Schweiß- und/oder Lötzusatzzuführeinrichtung gekoppeltes Montageelement um die Brennerlängsachse in Brennerumfangsrichtung verstellt.

Je nach Verfahrensausgestaltung kann hierbei entweder das Montageelement, an welchem die wenigstens eine Schweiß- und/oder Lötzusatzzuführeinrichtung angebracht ist, um den Brenner herum bewegt werden, oder es wird die wenigstens eine Schweiß- und/oder Lötzusatzzuführeinrichtung entlang des Montageelementes bewegt, wobei das Montageelement selbst gegenüber dem Brenner nicht bewegt wird.

In einer besonders vorteilhaften Ausbildung des erfindungsgemäßen Verfahrens wird der Schweiß- und/oder Lötzusatz durch wenigstens drei um den Brenner angeordnete, zueinander und relativ zu dem Brenner positionsverstellbare Schweiß- und/oder Lötzusatzzuführeinrichtungen der Schweiß- oder Lötstelle zugeführt wird, wobei die Schweiß- und/oder Lötzusatzzuführeinrichtungen jeweils separat mit Strom mit zeitlich zueinander versetzter Amplitude versorgt werden.

Bei dieser Ausführungsform des erfindungsgemäßen Verfahrens werden durch die zeitlich zueinander versetzte Stromspeisung der um den Brenner vorgesehenen Schweiß- und/oder Lötzusatzzuführeinrichtungen zeitlich zueinander versetzte Magnetfelder um die Schweiß- und/oder Lötzusatzzuführeinrichtungen ausgebildet. Diese treten in Wechselwirkung mit dem um den zwischen dem Brenner und dem zu verschweißenden Werkstück Lichtbogen ausgebildeten ringförmigen Magnetfeld und lenken dadurch den Lichtbogen derart ab, dass dieser eine kreisförmige oder elliptische Bewegung ausführt. Eine solche Bewegung des Lichtbogens ist insbesondere beim Schweißen von Kurvenbahnen von besonderem Vorteil, da hier lückenlose Schweißnäht mit hoher Qualität erzeugt werden können.

Durch das Verstellen der um den Brenner angeordneten Schweiß- und/oder Lötzusatzzuführeinrichtungen kann die Ablenkung des Lichtbogens anwendungsfallspezifisch angepasst und damit das erfindungsgemäße Verfahren mit gleichbleibender Qualität in unterschiedlichen Anwendungsfällen mit verschiedenen Prozessbedingungen eingesetzt werden.

Das Magnetfeld des Lichtbogens entsteht aufgrund eines Stromflusses von dem elektrisch kontaktierten Brenner in das ebenfalls elektrisch kontaktierte Werkstück über den Lichtbogen als elektrischen Leiter, wobei zwischen dem Brenner und dem Werkstück eine Wechselspannung oder eine Gleichspannung angelegt werden kann. Die Magnetfelder um die Schweiß- und/oder Lötzusatzzuführeinrichtungen ergeben sich aus deren zeitlich zueinander versetzter Beaufschlagung mit Strom.

Die einzustellenden Periodendauern, Frequenzen, Stromstärken und Spannungen des jeweils verwendeten Wechsel- oder Gleichstroms können anwendungsfallspezifisch gewählt werden. Die Zuführung des Wechsel- oder Gleichstroms kann entweder manuell oder automatisch erfolgen. Insofern die Zuführung automatisch erfolgt, kann diese basierend auf zuvor ermittelten Messwerten, Prozessereignissen oder anhand eines programmierten Musters erfolgen.

Durch die zeitlich zueinander versetzte Strombeaufschlagung der wenigstens drei um den Brenner angeordneten Schweiß- und/oder Lötzusatzzuführeinrichtungen kann der Lichtbogen des Brenners derart abgelenkt werden, dass dieser sich auf einer Kreisbahn um die Schweiß- oder Lötstelle bewegt, was insbesondere beim Schweißen oder Löten von Kurvenbahnen sehr vorteilhaft ist.

Bei dieser Ausführungsform des erfindungsgemäßen Verfahrens ist es auch möglich, mehr als drei zeitlich zueinander versetzt mit Strom beaufschlagte Schweiß- und/oder Lötzusatzzuführeinrichtungen um den Brenner anzuordnen.

Die wenigstens drei um den Brenner vorgesehenen Schweiß- und/oder Lötzusatzzuführeinrichtungen können mit Wechselstrom aber auch mit Gleichstrom mit von Schweiß- und/oder Lötzusatzzuführeinrichtung zu Schweiß- und/oder Lötzusatzzuführeinrichtung zeitlich wechselnder Amplitude versorgt werden. Insofern die Schweiß- und/oder Lötzusatzzuführeinrichtungen mit Gleichstrom beaufschlagt werden, können für eine ellipsen- oder kreisförmige Ableitung des Lichtbogens die Gleichstromquellen beispielsweise stetig an- und abgeschalten werden. Insbesondere zur Erzeugung einer kreisförmigen Bewegung des Lichtbogens sollten hierbei die Gleichstromquellen der wenigstens drei um den Brenner vorgesehenen Schweiß- und/oder Lötzusatzzuführeinrichtungen zeitlich versetzt zueinander ein- und abgeschalten werden.

Durch eine bei dem erfindungsgemäßen Verfahren mögliche symmetrische Verteilung der Schweiß- oder Lötzusätze und einer damit gekoppelten symmetrischen Verteilung der um die Schweiß- und/oder Lötzusatzzuführeinrichtungen ausgebildeten magnetischen Wechselfelder kann der Lichtbogen vorteilhafterweise auf einer besonders genauen Kreisbahn geführt werden, wodurch Schweiß- oder Lötnähte mit besonders hoher Qualität ausgebildet werden können.

Die wenigstens zwei Schweiß- und/oder Lötzusatzzuführeinrichtungen können durch separate Stromquellen oder eine pulsbare Stromquelle mit Strom beaufschlagt werden. Bei der Zuführung von Wechselstrom zu den Schweiß- und/oder Lötzusatzzuführeinrichtungen ist lediglich wichtig, dass die Schweiß- und/oder Lötzusatzzuführeinrichtungen mit zeitlich zueinander versetzten Wechselströmen beaufschlagt werden, sodass der Lichtbogen in gewünschter Weise abgelenkt werden kann.

Vorteilhafte Ausführungsformen der vorliegenden Erfindung, deren Aufbau, Funktion und Vorteile sind im Folgenden anhand von Figuren näher erläutert, wobei
- Figur 1: schematisch eine Ausgestaltungsvariante einer erfindungsgemäßen Lichtbogenschweißvorrichtung in einer Seitenansicht von rechts unten zeigt;
- Figur 2: schematisch die in Figur 1 dargestellte erfindungsgemäße Lichtbogenschweißvorrichtung in einer Seitenansicht zeigt;
- Figur 3: schematisch eine Ausgestaltungsvariante von an Montageelementen angebrachten Schweißzusatzzuführeinrichtungen in einer Seitenansicht von oben rechts zeigt; und
- Figur 4: schematisch übereinander angeordnete Montageelemente in einer Draufsicht zeigt.

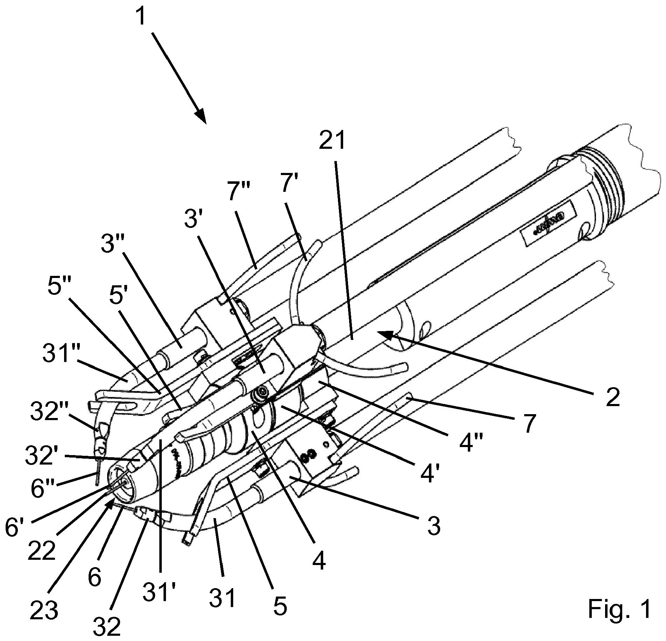

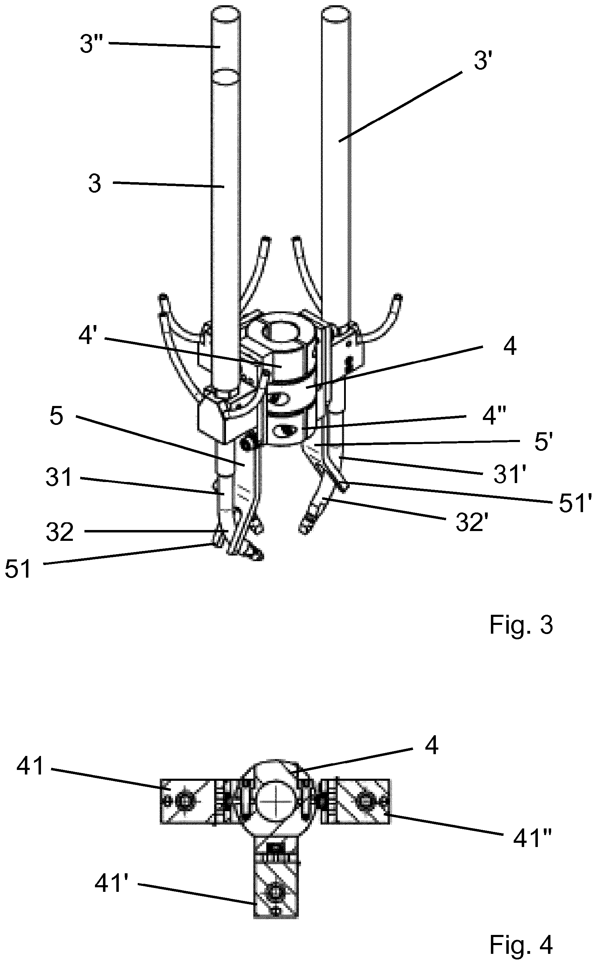

Die Figuren 1 bis 3 zeigen eine bevorzugte Ausführungsvariante einer erfindungsgemäßen Lichtbogenschweißvorrichtung 1 aus unterschiedlichen Blickwinkeln und Figur 4 zeigt eine Anordnung von Montageelementen der Lichtbogenschweißvorrichtung 1, wobei gleiche Bezugszeichen gleiche Komponenten bezeichnen. Eine Lichtbogenlötvorrichtung ist in den Figuren 1 bis 4 nicht dargestellt, diese kann jedoch einen gleichen oder ähnlichen Aufbau wie die dargestellte Lichtbogenschweißvorrichtung 1 besitzen.

Figur 1 zeigt die Lichtbogenschweißvorrichtung 1 in einer Seitenansicht von rechts unten. Die Lichtbogenschweißvorrichtung 1 weist einen Brenner 2 sowie drei um den Brenner 2 angeordnete Schweißzusatzzuführeinrichtungen 3, 3', 3" auf. Die Schweißzusatzzuführeinrichtungen 3, 3', 3" sind jeweils relativ zu dem Brenner 2 um die Brennerlängsachse L in Brennerumfangsrichtung U positionsverstellbar.

In anderen, nicht gezeigten Ausführungsformen der vorliegenden Erfindung kann/können neben dem Brenner 2 auch nur eine oder zwei oder auch mehr als drei relativ zu dem Brenner 2 positionsverstellbare Schweißzusatzzuführeinrichtungen 3, 3', 3" vorgesehen sein, wobei die nachfolgenden Ausführungen insbesondere hinsichtlich der Anordnung, Montage und Verstellbarkeit der Schweißzusatzzuführeinrichtungen 3, 3', 3" auch für einzelne dieser Schweißzusatzzuführeinrichtungen 3, 3', 3" gelten.

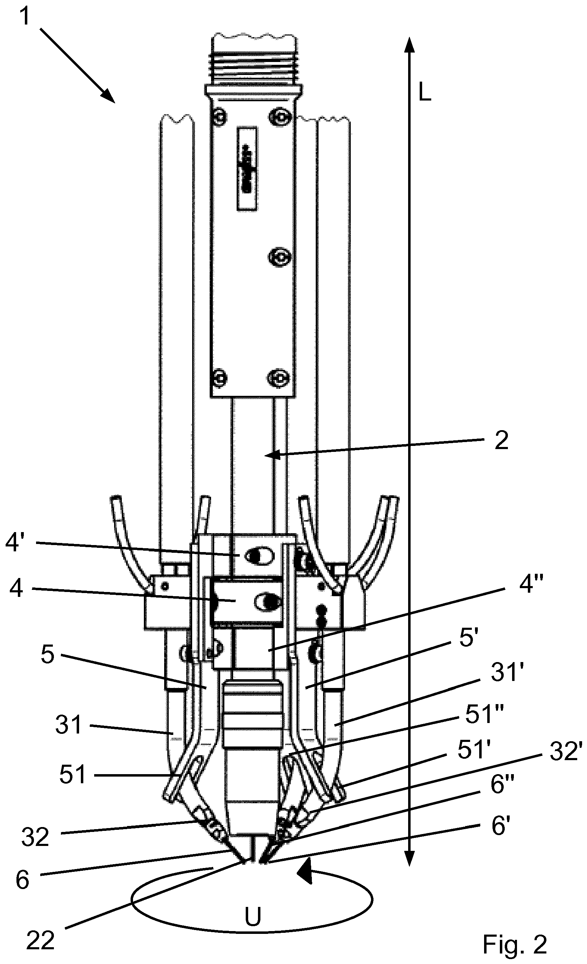

Durch Beaufschlagung des Brenners 2, insbesondere einer innerhalb eines Brennerkontaktrohres 21 eingebrachten Brennerelektrode 22 und eines zu verschweißenden, nicht abgebildeten Werkstückes mit Wechselstrom oder Gleichstrom bildet sich während eines Schweißprozesses ein Lichtbogen zwischen dem Brenner 2 und dem Werkstück aus. Der Lichtbogen dient insbesondere dem Aufschmelzen von Schweißzusätzen 6, 6', 6", welche ein zum Schweißen notwendiges Schmelzbad ausbilden. In dem in den Figuren 1 und 2 dargestellten Ausführungsbeispiel der Lichtbogenschweißvorrichtung 1 ist die Brennerelektrode 22 nicht abschmelzend, diese kann in weiteren Ausgestaltungsvarianten der Erfindung jedoch auch abschmelzend ausgebildet sein.

Die Schweißzusätze 6, 6', 6" werden durch Schweißzusatzleitungen 31, 31', 31" dem Lichtbogen zugeführt. Wie in den Figuren 1 und 2 dargestellt, sind die Schweißzusätze 6, 6', 6" bevorzugt als elektrisch leitfähiger Heißdraht ausgebildet, können jedoch auch in alternativen Ausbildungen der Erfindung beispielsweise als Kaltdraht oder elektrisch leitfähiges Pulver vorliegen. Insofern ein Kaltdraht als Schweißzusatz zum Schweißen verwendet wird, wird dieser anders als bei der Verwendung eines Heißdrahtes nicht an eine den Draht vorwärmende Stromquelle angeschlossen.

Es ist bekannt, dass die Form und der Verlauf einer auszubildenden Schweißnaht insbesondere durch die Ausrichtung des Lichtbogens beeinflusst wird, weshalb erfindungsgemäß der durch die Lichtbogenschweißvorrichtung 1 erzeugte Lichtbogen gezielt ablenkbar ist. Hierfür werden die Schweißzusatzzuführeinrichtungen 3, 3', 3" jeweils mit einem zeitlich zueinander versetzten Gleich- oder Wechselstrom beaufschlagt. Durch den Stromfluss bildet sich ein magnetisches Feld um die jeweilige Schweißzusatzzuführeinrichtung 3, 3', 3" aus, welches mit dem magnetischen Feld des Lichtbogens wechselwirkt. Aufgrund der zeitlich versetzten Beaufschlagung der Schweißzusatzzuführeinrichtungen 3, 3', 3" mit Strom kann eine kreisförmige Bewegung des Lichtbogens realisiert werden, welche sich insbesondere zum Schweißen von Kurvenbahnen eignet.

Zur Stromversorgung der Schweißzusatzzuführeinrichtungen 3, 3', 3" sind an den Schweißzusatzzuführeinrichtungen 3, 3', 3" elektrische Leitungen 7, 7', 7" vorgesehen. Vorzugsweise sind die Schweißzusatzzuführeinrichtungen 3, 3', 3" an separaten, nicht abgebildeten Wechselstromquellen angeschlossen, sie können jedoch auch durch wenigstens eine pulsbare Wechselstromquelle mit Wechselstrom versorgt werden. Ebenso ist es jedoch auch möglich, dass die Schweißzusatzzuführeinrichtung 3, 3', 3" durch jeweils eine separate Gleichstromquelle mit Strom beaufschlagt werden. Zur Erzeugung einer ellipsen- oder kreisförmigen Bewegung des Lichtbogens werden die Gleichstromquellen zeitlich versetzt zueinander ein- und ausgeschaltet. Die Frequenz, Periode, Stromstärke und Spannung der angelegten Wechsel- oder Gleichströme können hierbei anwendungsfallspezifisch ausgewählt werden.

Um eine besonders exakte Kreisbewegung des Lichtbogens erzeugen zu können, sind die Schweißzusatzzuführeinrichtungen 3, 3', 3", wie in Figur 1 oder 3 ersichtlich, symmetrisch verteilt um den Brenner 2 angeordnet. In anderen, nicht gezeigten Ausbildungen der erfindungsgemäßen Lichtbogenschweißvorrichtung können die Schweißzusatzzuführeinrichtungen 3, 3', 3" jedoch auch unsymmetrisch verteilt um den Brenner 2 herum vorgesehen sein. Auch ist es möglich, dass mehr als drei Schweißzusatzzuführeinrichtungen 3, 3', 3", wie beispielsweise vier, fünf oder sechs Schweißzusatzzuführeinrichtungen 3, 3', 3" zum Einsatz kommen. Umso mehr Schweißzusatzzuführeinrichtungen 3, 3', 3" an dem Brenner 2 angebracht werden, umso komplexer, schwerer und teurer wird die Lichtbogenschweißvorrichtung 1. Vorteilhafterweise kann mit zunehmender Anzahl an Schweißzusatzzuführeinrichtungen 3, 3', 3", welche um den Brenner 2 herum angeordnet werden, jedoch auch der Lichtbogen präziser abgelenkt werden.

Die Schweißzusatzzuführeinrichtungen 3, 3', 3" erstrecken sich in Richtung einer Brennerlängsachse L entlang des Brenners 2 bis hin zu einem Brennerende 23. Zur besseren Zuführung des Schweißdrahtes 6, 6', 6" zu dem Lichtbogen sind Schweißzusatzzuführungsenden 32, 32', 32" der entlang des Brenners 2 verlaufenden Schweißzusatzzuführungen 3, 3', 3", wie in den Figuren 1 bis 3 gezeigt, in Richtung des auszubildenden, hier nicht gezeigten Lichtbogens abgewinkelt. Der Winkel, mit welchem die Schweißzusatzzuführungsenden 32, 32', 32" abgewinkelt sind, kann beispielsweise in Abhängigkeit von der Anordnung der Schweißzusatzzuführeinrichtungen 3, 3', 3" an dem Brenner 2 gewählt werden. Ebenso ist es auch möglich, dass die Schweißzusatzzuführungsenden 32, 32', 32" in weiteren Ausgestaltungsvarianten der Lichtbogenschweißvorrichtung 1 nicht abgewinkelt sind, sondern geradlinig verlaufen. Hierbei können die Schweißzusatzzuführeinrichtungen 3, 3', 3", insbesondere die Schweißzusatzleitungen 31, 31', 31" nicht parallel zu dem Brenner 2, insbesondere zu dem Brennerkontaktrohr 21, sondern in einem Winkel auf das Brennerende 23 zulaufen. Ferner kann auch eine abgewinkelte Schweißzusatzleitung 31, 31', 31" nicht parallel zu dem Brennerkontaktrohr 21, sondern in einem Winkel auf dieses zulaufen.

Die Schweißzusatzzuführeinrichtungen 3, 3', 3" sind jeweils an einem Montagering 4, 4', 4" angebracht, welcher um das Brennerkontaktrohr 21 geklemmt ist. Hierzu sind die Montageringe 4, 4', 4", wie in Figur 3 gezeigt, zweiteilig ausgebildet, wodurch der jeweilige Montagering 4, 4', 4" zum Befestigen an dem Brennerkontaktrohr 21 auseinander- und wieder zusammengeklappt werden kann.

Die Anbringung der Schweißzusatzzuführeinrichtungen 3, 3', 3" an dem Brenner 2 mittels des jeweiligen Montageringes 4, 4', 4" ermöglicht nicht nur einen einfachen Austausch eines der Schweißzusatzzuführeinrichtungen 3, 3', es kann zudem auch problemlos ein Schweißzusatzzuführeinrichtungen 3, 3', 3" hinzugefügt oder weggenommen werden, wodurch die Lichtbogenschweißvorrichtung 1 optimal an den jeweiligen Schweißprozess und dessen Bedingungen angepasst werden kann.

Ferner sind die Montageelemente 4, 4', 4" auch so an dem Brennerkontaktrohr 21 vorgesehen, dass diese in Brennerumfangsrichtung U, wie in Figur 2 gezeigt, gedreht werden können, sodass die Anordnung der Schweißzusatzzuführeinrichtungen 3, 3', 3" um den Brenner 2 herum einfach variiert werden kann. Durch das Variieren der Anordnung der Schweißzusatzzuführeinrichtungen 3, 3', 3", beispielsweise von einer symmetrischen Anordnung in eine unsymmetrische, kann die Bewegung des Lichtbogens auf einfache Weise beeinflusst werden, wodurch die Lichtbogenschweißvorrichtung 1 für unterschiedliche Schweißaufgaben verwendet werden kann.

In dem in den Figuren 1 bis 3 gezeigten Ausführungsbeispiel sind die Schweißzusatzzuführeinrichtungen 3, 3', 3" fest mit jeweils einem Montagering 4, 4', 4" verbunden, wobei der Montagering 4, 4', 4" relativ zu dem Brennerkontaktrohr 21 bewegbar ist. In alternativen Ausgestaltungsvarianten der erfindungsgemäßen Lichtbogenschweißvorrichtung 1 können jedoch auch die Montageringe 4, 4', 4" unbeweglich an dem Brennerkontaktrohr 21 befestigt sein, wobei die Schweißzusatzzuführeinrichtungen 3, 3', 3" beweglich an den Montageringen 4, 4', 4" vorgesehen sind. Hierzu können die Montageringe 4, 4', 4" beispielsweise eine Nut und eine Klemmvorrichtung, an welcher die Schweißzusatzzuführeinrichtungen 3, 3', 3" angebracht sind, aufweisen.

Figur 4 zeigt die drei Montageringe 4, 4', 4" in einer übereinander angeordneten Lage in einer Draufsicht. Wie in Figur 4 dargestellt, weisen die Montageringe 4, 4', 4" rechteckförmige Auskragungen 41, 41', 41" auf, in welchen jeweils eine Durchgangsbohrung 42, 42', 42" eingebracht ist. Die Durchgangsbohrungen 42, 42', 42" dienen, wie in Figur 3 gezeigt, der Aufnahme jeweils einer Schweißzusatzleitung 31, 31', 31" einer Schweißzusatzzuführeinrichtung 3, 3', 3".

In alternativen Varianten der erfindungsgemäßen Lichtbogenschweißvorrichtung 1 muss der Montagering 4, 4', 4" nicht eine derartige Auskragung 41, 41', 41" und/oder eine solche Durchgangsbohrung 42, 42', 42" zur Aufnahme einer Schweißzusatzleitung 31, 31', 31" aufweisen. Stattdessen kann die Auskragung andersartig ausgestaltet sein bzw. muss der Montagering auch keine Auskragung aufweisen. So kann die Schweißzusatzleitung 31, 31', 31" beispielsweise in einer Bohrung, Aussparung oder an einer äußeren Mantelfläche des Montageringes 4, 4', 4" ein- bzw. angebracht sein. Auch muss das Montageelement 4, 4', 4", mittels welchem die Schweißzusatzzuführeinrichtungen 3, 3', 3" an dem Brenner 2 angeordnet sind, auch nicht ringförmig ausgebildet sein, sondern kann auch als halber Ring, Zapfen, Rechteck oder ähnliches ausgestaltet sein.

In weiteren Ausführungsformen der erfindungsgemäßen Lichtbogenschweißvorrichtung 1 muss zudem nicht jede Schweißzusatzzuführeinrichtung 3, 3', 3" an einem separaten Montageelement 4, 4', 4" angebracht sein. Vielmehr können auch mehrere Schweißzusatzzuführeinrichtungen 3, 3', 3" voneinander in der Brennerumfangsrichtung U des Brenners 2 beabstandet an einem gemeinsamen Montageelement 4, 4', 4" vorgesehen sein. Zudem muss das Montageelement 4, 4', 4" auch nicht an dem Brennerkontaktrohr 21 angebracht sein, sondern kann auch an einem anderen Element des Brenners 2 oder unabhängig von dem Brenner 2, neben dem Brenner 2 angeordnet sein. Auch muss das Montageelement 4, 4', 4" nicht um das Brennerkontaktrohr 21 oder ein anderes Element des Brenners 2 geklemmt sein, sondern kann auch beispielsweise mittels wenigstens einer Schraube, wenigstens eines Nietes, wenigstens einer Klebeverbindung, einer Pressverbindung oder einer ähnlichen Verbindungsart befestigt sein.

Zur sicheren und positionsgerechten Führung der Schweißzusatzzuführeinrichtungen 3, 3', 3" zu der Schweißstelle bzw. zu dem Lichtbogen, werden die Schweißzusatzzuführeinrichtungen 3, 3', 3", wie beispielsweise in Figur 1 gezeigt, durch jeweils ein Führungselement 5, 5', 5" geführt. Die Führungselemente 5, 5', 5" sind an jeweils einem der Montageringe 4, 4', 4" angebracht und erstrecken sich in Brennerlängsrichtung L von dem Montagering 4, 4', 4" in Richtung des Brennerendes 23. Wie in Figur 1 dargestellt, sind die Führungselemente 5, 5', 5" in Form zweizinkiger Gabeln ausgebildet, wobei ein zu dem Lichtbogen hin zeigendes Ende 51, 51', 51" des jeweiligen Führungselementes 5, 5', 5" jeweils eine Schweißzusatzleitung 31, 31', 31" zwischen den Gabelzinken aufnimmt. Hierbei sind die Führungselemente 5, 5', 5" zwischen dem Brenner 2 und der jeweiligen Schweißzusatzleitung 31, 31', 31" verlaufend angeordnet. In einer alternativen Ausgestaltungsform der Lichtbogenschweißvorrichtung 1 können die Führungselemente 5, 5', 5" jedoch auch außerhalb der Schweißzusatzleitungen 31, 31', 31" verlaufen.

Zur besseren Aufnahme der Schweißzusatzleitungen 31, 31', 31" sind die Enden 51, 51', 51" der Führungselemente 5, 5', 5" von dem Brenner 2 wegweisend, in Richtung der Schweißzusatzleitungen 31, 31', 31" abgewinkelt. Der Winkel, mit welchem die Enden 51, 51', 51" der Führungselemente 5, 5', 5"auf den auszubildenden Lichtbogen ausgerichtet sind, kann beliebig gewählt werden. Ferner können die Führungselemente 5, 5', 5" in alternativen Ausgestaltungsvarianten der Lichtbogenschweißvorrichtung jedoch auch geradlinig verlaufen und/oder das jeweilige Führungselement 5, 5', 5" nicht parallel zu dem Brennerkontaktrohr 21, sondern in einem gewünschten Winkel zu diesem angeordnet sein. Zudem müssen die Führungselemente 5, 5', 5" auch nicht gabelförmig ausgebildet sein, sondern können eine beliebige andere Form aufweisen. Beispielsweise können die Führungselemente 5, 5', 5" als zapfenförmige Abstandshalter ausgebildet sein.

## Patentansprüche

1. Lichtbogenschweiß- und/oder -lötvorrichtung (1) mit einem an eine Brennerstromquelle angeschlossenen Brenner (2) und einer neben dem Brenner (2) vorgesehenen Schweiß- und/oder Lötzusatzzuführeinrichtung (3),
**dadurch gekennzeichnet,**
**dass** neben dem Brenner (2) wenigstens zwei relativ zueinander und zu dem Brenner (2) um eine Brennerlängsachse (L) in Brennerumfangsrichtung (U) positionsverstellbare Schweiß- und/oder Lötzusatzzuführeinrichtungen (3, 3', 3") vorgesehen sind.

2. Lichtbogenschweiß- und/oder -lötvorrichtung nach Anspruch 1, **dadurch gekennzeichnet, dass** die wenigstens eine Schweiß- und/oder Lötzusatzzuführeinrichtung (3, 3', 3") an einem an dem Brenner (2) vorgesehenen, um die Brennerlängsachse (L) in Brennerumfangsrichtung (U) verstellbaren Montageelement (4, 4', 4") montiert ist.

3. Lichtbogenschweiß- und/oder -lötvorrichtung nach Anspruch 2, **dadurch gekennzeichnet, dass** das Montageelement (4, 4', 4") ein um ein Brennerkontaktrohr (21) des Brenners (2) vorgesehener Montagering ist.

4. Lichtbogenschweiß- und/oder -lötvorrichtung nach Anspruch 2 oder 3, **dadurch gekennzeichnet, dass** das Montageelement (4, 4', 4") an das Brennerkontaktrohr (21) klemmbar oder geklemmt ist.

5. Lichtbogenschweiß- und/oder -lötvorrichtung nach einem der Ansprüche 2 bis 4, **dadurch gekennzeichnet, dass** an dem Montageelement (4, 4', 4") wenigstens ein Führungselement (5, 5', 5") für eine Schweiß- und/oder Lötzusatzleitung (31, 31', 31") der Schweiß- und/oder Lötzusatzzuführeinrichtung (3, 3', 3") vorgesehen ist.

6. Lichtbogenschweiß- und/oder -lötvorrichtung nach Anspruch 5, **dadurch gekennzeichnet, dass** das wenigstens eine Führungselement (5, 5', 5") gabelförmig ausgebildet ist.

7. Lichtbogenschweiß- und/oder -lötvorrichtung nach einem der vorhergehenden Ansprüche, **dadurch gekennzeichnet, dass** die wenigstens eine Schweiß- und/oder Lötzusatzzuführeinrichtung (3, 3', 3") entlang der Brennerlängsachse (L) verläuft und ein in Richtung eines durch den Brenner (2) ausbildbaren Lichtbogens ausgerichtetes Schweiß- und/oder Lötzusatzzuführungsende (32, 32', 32") aufweist.

8. Lichtbogenschweiß- und/oder -lötvorrichtung nach einem der vorhergehenden Ansprüche, **dadurch gekennzeichnet, dass** um den Brenner (2) wenigstens drei, mit Strom mit zeitlich zueinander versetzter Amplitude versorgbare, in ihrer Position relativ zueinander einstellbare und/oder symmetrisch um den Brenner (2) anordenbare Schweiß- und/oder Lötzusatzzuführeinrichtungen (3, 3', 3") angeordnet sind.

9. Lichtbogenschweiß- und/oder -lötvorrichtung nach Anspruch 8, **dadurch gekennzeichnet, dass** die Schweiß- und/oder Lötzusatzzuführeinrichtungen (3, 3', 3") an separate Stromquellen oder an wenigstens eine pulsbare Stromquelle angeschlossen sind.

10. Lichtbogenschweiß- und/oder -lötverfahren, bei welchem ein Brenner (2) durch eine Brennerstromquelle mit Strom versorgt wird und einer Schweiß- oder Lötstelle durch wenigstens eine neben dem Brenner (2) vorgesehene Schweiß- und/oder Lötzusatzzuführeinrichtung (3) ein Schweiß- oder Lötzusatz (6, 6', 6") zugeführt wird,
**dadurch gekennzeichnet,**
**dass** um den Brenner (2) wenigstens zwei Schweiß- und/oder Lötzusatzzuführeinrichtungen (3, 3', 3") vorgesehen sind, deren Position zueinander und relativ zu dem Brenner um eine Brennerlängsachse (L) in Brennerumfangsrichtung (U) vor und/oder während und/oder nach dem Schweißvorgang verstellt wird.

11. Lichtbogenschweiß- und/oder -lötverfahren nach Anspruch 10, **dadurch gekennzeichnet, dass** durch wenigstens drei um den Brenner (2) angeordnete, zueinander und relativ zu dem Brenner (2) positionsverstellbare Schweiß- und/oder Lötzusatzzuführeinrichtungen (3, 3', 3") Schweiß- und/oder Lötzusatz (6, 6', 6") der Schweiß- oder Lötstelle zugeführt wird, wobei die Schweiß- und/oder Lötzusatzzuführeinrichtungen (3, 3', 3") jeweils separat mit Strom mit zeitlich zueinander versetzter Amplitude versorgt werden.

12. Lichtbogenschweiß- und/oder -lötverfahren nach Anspruch 11, **dadurch gekennzeichnet, dass** die Schweiß- und/oder Lötzusatzzuführeinrichtungen (3, 3', 3") durch separate Stromquellen oder wenigstens eine pulsbare Stromquelle mit Strom beaufschlagt werden.

## Claims

1. An arc welding and/or soldering device (1) having a torch (2) connected to a torch power source and a welding and/or soldering additive supply device (3) provided in addition to the torch (2), **characterized in that** in addition to the torch (2) at least two welding and/or soldering additive supply devices (3, 3', 3") are provided which are adjustable in position relative to one another and to the torch (2) about a torch longitudinal axis (L) in the torch circumferential direction (U).

2. The arc welding and/or soldering device according to claim 1, **characterized in that** the at least one welding and/or soldering additive supply device (3, 3', 3") is mounted on an adjustable mounting element (4, 4', 4") provided on the torch (2) around the longitudinal axis of the torch (L) in the burner circumferential direction (U).

3. The arc welding and/or soldering device according to claim 2, **characterized in that** the mounting element (4, 4', 4") is a mounting ring provided around a torch contact tube (21) of the torch (2).

4. The arc welding and/or soldering device according to claim 2 or 3, **characterized in that** the mounting element (4, 4', 4") is clampable or is clamped to the torch contact tube (21).

5. The arc welding and/or soldering device according to one of claims 2 to 4, **characterized in that** on the mounting element (4, 4', 4") at least one guide element (5, 5', 5") for a welding and/or soldering additive line (31, 31', 31") of the welding and/or soldering additive supply device (3, 3', 3") is provided.

6. The arc welding and/or soldering device according to claim 5, **characterized in that** the at least one guide element (5, 5', 5") is fork-shaped.

7. The arc welding and/or soldering device according to one of the preceding claims, **characterized in that** the at least one welding and/or soldering additive supply device (3, 3', 3") runs along the longitudinal axis of the torch (L) and has a welding and/or soldering additive supply end (32, 32', 32") aligned in the direction of an arc formable by the torch (2).

8. The arc welding and/or soldering device according to any one of the preceding claims, **characterized in that** around the torch (2) at least three welding and/or soldering additive supply devices (3, 3', 3") are arranged which can be supplied with current with an amplitude offset in time, and which are adjustable in position relative to one another and/or arrangeable symmetrically about the torch (2).

9. The arc welding and/or soldering device according to claim 8, **characterized in that** the welding and/or soldering additive feed devices (3, 3', 3") are connected to separate power sources or to at least one pulsable power source.

10. An arc welding and/or soldering method, in which a torch (2) is supplied with current by a torch power source and a welding or soldering point is supplied with a welding or soldering additive (6, 6', 6") by at least one welding and/or solder additive supply device (3) provided in addition to the torch (2), **characterized in that** at least two welding and/or soldering additive supply devices (3, 3', 3") are provided around the burner (2), wherein their position relative to one another and relative to the torch is adjusted about a torch longitudinal axis (L) in the torch circumferential direction (U) before and/or during and/or after the welding process.

11. The arc welding and/or soldering method according to Claim 10, **characterized in that** by means of at least three welding and/or soldering additive supply devices (3, 3', 3") which are arranged around the torch (2) and are position-adjustable relative to one another and relative to the torch (2), welding and/or soldering additive (6, 6', 6") is supplied to the welding or soldering point, wherein the welding and/or soldering additive supply devices (3, 3', 3") are each separately supplied power with an amplitude offset in time.

12. The arc welding and/or soldering method according to claim 11, **characterized in that** the welding and/or soldering additive feed devices (3, 3', 3") are supplied with current by separate current sources or at least one pulsable current source.

## Revendications

1. Dispositif de soudage et/ou de brasage à l'arc électrique (1) comportant un brûleur (2) relié à une source de courant de brûleur, et un dispositif d'alimentation en additif de soudage et/ou de brasage (3) prévu à côté du brûleur (2), **caractérisé en ce qu'au** moins deux dispositifs d'alimentation en additif de soudage et/ou de brasage (3, 3', 3") sont prévus à côté du brûleur (2), lesquels au moins deux dispositifs d'alimentation en additif de soudage et/ou de brasage peuvent être réglés en position l'un par rapport à l'autre et par rapport au brûleur (2) autour d'un axe longitudinal (L) de brûleur dans la direction circonférentielle (U) de brûleur.

2. Dispositif de soudage et/ou de brasage à l'arc électrique selon la revendication 1, **caractérisé en ce que** l'au moins un dispositif d'alimentation en additif de soudage et/ou de brasage (3, 3', 3") est monté sur un élément de montage (4, 4', 4") prévu au niveau du brûleur (2) et pouvant être réglé autour de l'axe longitudinal (L) de brûleur dans la direction circonférentielle (U) de brûleur.

3. Dispositif de soudage et/ou de brasage à l'arc électrique selon la revendication 2, **caractérisé en ce que** l'élément de montage (4, 4', 4") est un anneau de montage prévu autour d'un tube de contact (21) du brûleur (2).

4. Dispositif de soudage et/ou de brasage à l'arc électrique selon la revendication 2 ou 3, **caractérisé en ce que** l'élément de montage (4, 4', 4") peut être serré ou est serré sur le tube de contact de brûleur (21).

5. Dispositif de soudage et/ou de brasage à l'arc électrique selon l'une des revendications 2 à 4, **caractérisé en ce qu'au** moins un élément de guidage (5, 5', 5") pour une conduite supplémentaire de soudage et/ou de brasage (31, 31', 31") du dispositif d'alimentation en additif de soudage et/ou de brasage (3, 3', 3") est prévu au niveau de l'élément de montage (4, 4', 4").

6. Dispositif de soudage et/ou de brasage à l'arc électrique selon la revendication 5, **caractérisé en ce que** l'au moins un élément de guidage (5, 5', 5") est en forme de fourche.

7. Dispositif de soudage et/ou de brasage à l'arc électrique selon l'une des revendications précédentes, **caractérisé en ce que** l'au moins un dispositif d'alimentation en additif de soudage et/ou de brasage (3, 3', 3") s'étend le long de l'axe longitudinal (L) de brûleur et comporte une extrémité d'alimentation en additif de soudage et/ou de brasage (32, 32', 32") orientée dans la direction d'un arc pouvant être formé par le brûleur (2).

8. Dispositif de soudage et/ou de brasage à l'arc électrique selon l'une des revendications précédentes, **caractérisé en ce qu'**au moins trois dispositifs d'alimentation en additif de soudage et/ou de brasage (3, 3', 3"), pouvant être alimentés avec un courant d'amplitudes décalées l'une par rapport à l'autre dans le temps, pouvant être réglés dans leur position les uns par rapport aux autres et/ou pouvant être disposés symétriquement autour du brûleur (2), sont disposés autour du brûleur (2).

9. Dispositif de soudage et/ou de brasage à l'arc électrique selon la revendication 8, **caractérisé en ce que** les dispositifs d'alimentation en additif de soudage et/ou de brasage (3, 3', 3") sont reliés à des sources de courant séparées ou à au moins une source de courant à impulsions.

10. Procédé de soudage et/ou de brasage à l'arc électrique, dans lequel un brûleur (2) est alimenté en courant par une source de courant de brûleur et un additif de soudage ou de brasage (6, 6', 6") est amené à un point de soudage ou de brasage par au moins un dispositif d'alimentation en additif de soudage et/ou de brasage (3) prévu à côté du brûleur (2), **caractérisé en ce qu'**au moins deux dispositifs d'alimentation en additif de soudage et/ou de brasage (3, 3', 3") sont prévus autour du brûleur (2), la position de ces deux dispositifs l'un par rapport à l'autre et par rapport au brûleur étant réglée autour d'un axe longitudinal (L) de brûleur dans la direction circonférentielle (U) de brûleur avant et/ou pendant et/ou après le processus de soudage.

11. Procédé de soudage et/ou de brasage à l'arc électrique selon la revendication 10, **caractérisé en ce que** l'additif de soudage et/ou de brasage (6, 6', 6") est amené au point de soudage ou de brasage par au moins trois dispositifs d'alimentation en additif de soudage et/ou de brasage (3, 3', 3") disposés autour du brûleur (2) et pouvant être réglés en position les uns par rapport aux autres et par rapport au brûleur (2), les dispositifs d'alimentation en additif de soudage et/ou de brasage (3, 3', 3") étant chacun alimentés séparément avec un courant d'amplitudes décalées l'une par rapport à l'autre dans le temps.

12. Procédé de soudage et/ou de brasage à l'arc électrique selon la revendication 11, **caractérisé en ce que** les dispositifs d'alimentation en additif de soudage et/ou de brasage (3, 3', 3") sont alimentés en courant par des sources de courant séparées ou par au moins une source de courant à impulsions.
